# EUROPEAN PATENT SPECIFICATION

(11) **EP 4 338 884 B1**
(45) Date of publication and mention of the grant of the patent: **10.06.2026**
(21) Application number: 23195909.9
(22) Date of filing: 07.09.2023
(51) Int. Cl.: B23Q 3/155, B23Q 3/157

(54) **NUMERICAL CONTROL APPARATUS AND MACHINING METHOD**
NUMERISCHE STEUERUNGSVORRICHTUNG UND BEARBEITUNGSVERFAHREN
APPAREIL DE COMMANDE NUMÉRIQUE ET PROCÉDÉ D'USINAGE

(30) Priority: 14.09.2022 IT 202200018798
(43) Date of publication of application: 20.03.2024
(73) Proprietor: C.M.S. S.p.A., 24019 Zogno (BG) (IT)
(72) Inventor: ZENERE, Dario, 36030 Lugo di Vicenza (VI) (IT)
(74) Representative: Luppi Intellectual Property S.r.l.

(56) References cited:
- EP-A1- 2 191 933
- WO-A1-2012/172415

## Description

### Background of the invention

The present invention relates to a CNC machining apparatus that includes a tool holder storage and a machining head that is equippable with such tool holders. The present invention moreover also refers to a method for changing a tool holder equipped on the machining head with a tool holder housed inside the storage; the CNC machining apparatus can be, for example, an apparatus for machining, in particular cutting, the flat glass. The CNC machining apparatus can be in other embodiments a CNC machining apparatus for machining other materials like wood, marble, stone, plastics, composite materials and metal.

### Prior art

CNC machining apparatuses including a tool holder storage and a machining head that is equippable with such tool holders are known. In particular, apparatuses are known for machining flat glass or other materials, including a machining head and a storage inside which different tool holders are stored, in suitable storages, so as to be able to adapt the tool equipped on the machining head in function of the thickness of the workpiece, of the type of machining task to be performed, for example cutting, or milling or of the desired effect.

The tool holder, and thus the tool, is often changed manually by an operator, causing lengthy machine downtime and compromising the efficiency of the apparatus. For example, apparatuses for machining flat glass or other materials are known in which the machining head features a rotatable storage for tool holders and the tool is changed by rotating the storage manually to the desired position.

In order to decrease machine downtime, some apparatuses are able to change the tool holder independently.

Apparatuses are for example known for machining flat glass or other materials, in which the machining head features a rotatable storage for tool holders that is provided with a motor drive for performing rotation. The presence of a further motor drive for rotating the storage nevertheless entails high costs and more frequent maintenance.

Apparatuses are further known that are provided with a storage for tool holders that is for example rectilinear placed on a fixed point of the work surface and a machining head that is able to reach the storage and carry out the switch. In particular, the machining head performs a series of linear movements so as to insert the tool holder being used inside the free housing, moving at the tool holder that it is desired to use and extracting the tool holder from the housing inside which it was stored.

Despite this, also in this case changing the tool holder is rather cumbersome because it is necessary for the machining head to reach the storage regardless of the position in which it finds itself.

For this reason, in some apparatuses, the storage disclosed above is positioned on the machining head, thus avoiding the machining head having to move as far as the zone of the storage whenever it is necessary to replace the equipped tool and at the same time enabling the machining head to be able to change position during replacement of the tool holder, for example by moving to the position in which the subsequent machining task will be initiated.

Nevertheless, the apparatuses disclosed above are very costly from the mechanical, electrical and software point of view because the machining head is not only asked to perform movements linked to processing the product but also a series of accurate movements relating to the replacement of the equipped tool. At the same time, the apparatuses are mechanically complex and require frequent maintenance.

An improvement of current CNC machining apparatuses including a tool holder storage and a machining head that is equippable with such tool holders is therefore desirable and thus also improvement of current apparatuses for cutting flat glass; in particular, it would be desirable to provide an economically advantageous solution that is compatible with a wide range of existing machining heads and, at the same time, ensures a fast and efficient tool change. WO 2012/172415 A1 **discloses an apparatus as in the preamble of claim 1** and a method as in the preamble of claim 12.

### Objects of the invention

One object of the present invention is to provide a CNC machining apparatus that is advantageous from the economic and maintenance point of view.

One object of the present invention is to make a CNC machining apparatus that permits a rapid tool change even with the machining head moving.

One object of the present invention is to offer a storage for tool holders that is compatible with a wide range of machining heads.

One object of the present invention is to propose a method for changing a tool holder equipped with a machining head that is simple and efficient.

### Short description of the invention

The objects listed above and yet others are attained by a CNC machining apparatus and a tool-changing method according to what is defined in the accompanying claims.

### Short description of the drawings

The invention can be better understood with reference to the accompanying drawings that illustrate an embodiment thereof by way of non-limiting example, in which:
Fig. 1 is a perspective view of a CNC machining apparatus provided with an operating unit and a work surface;
Fig. 2 is a partial bottom perspective view of a machining head equipped with a tool holder and a tool holder storage according to the invention, in a first operating configuration;
Fig. 3 is a partial bottom perspective view of the machining head and of the storage of Fig. 2, in a second operating configuration;
Fig. 4 is a partial bottom perspective view of the machining head and of the storage of Fig. 2, in a third operating configuration;
Fig. 5 is a side view of Fig. 2;
Fig. 6 is a top view of the storage in the operating configuration of Fig. 2;
Fig. 7 is a perspective partial section of the storage;
Fig. 8 is a partial bottom perspective view of the machining head and of the storage of Fig. 2, in a fourth operating configuration.

### Detailed description

With reference to the enclosed figures, a CNC machining apparatus 10 is disclosed below that comprises a machining head 11. The machining head 11 can be arranged slidingly on a crosspiece 52 along a first axis X controlled by the numerical control. The crosspiece 52 can be further slidingly coupled with a base along a second axis Y which is also controlled by the numerical control. In particular, the second axis Y can be orthogonal to the first axis X. The machining head 11 can be further movable along a third axis Z orthogonal to the first axis X and to the second axis Y and controlled by the numerical control. In addition, the machining head 11 can rotate around one or two or three rotation axes controlled by the numerical control.

The machining head 11 is configured to be equipped with a tool holder 19 and a relative tool so as to perform a machining task; for example, the CNC machining apparatus 10 can be an apparatus for cutting flat glass and the machining head 11, consequently a cutting head that is equippable with a series of tool holders 19-23 depending on the thickness of the glass and on the result that it is wished to obtain.

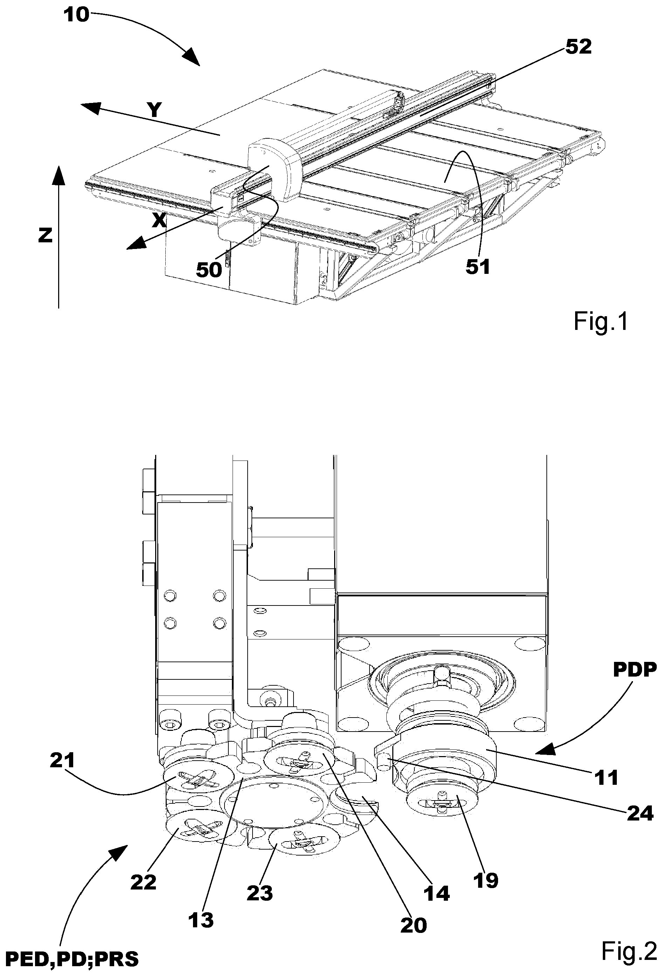

The tool holders 19-23 can be of conical shape, as shown in Figs 2-4; in particular, the tool holders 19-23 can be made, for example, of plastic or steel.

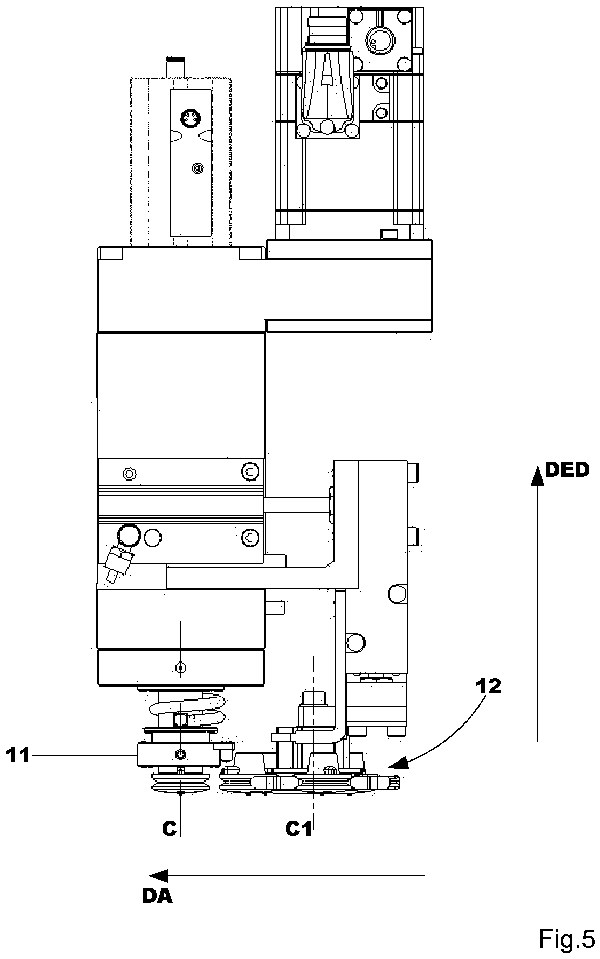

The machining head, as shown in Fig. 5, is provided with a controlled axis of rotation C (for example vertical) around which it is able to perform a rotary movement.

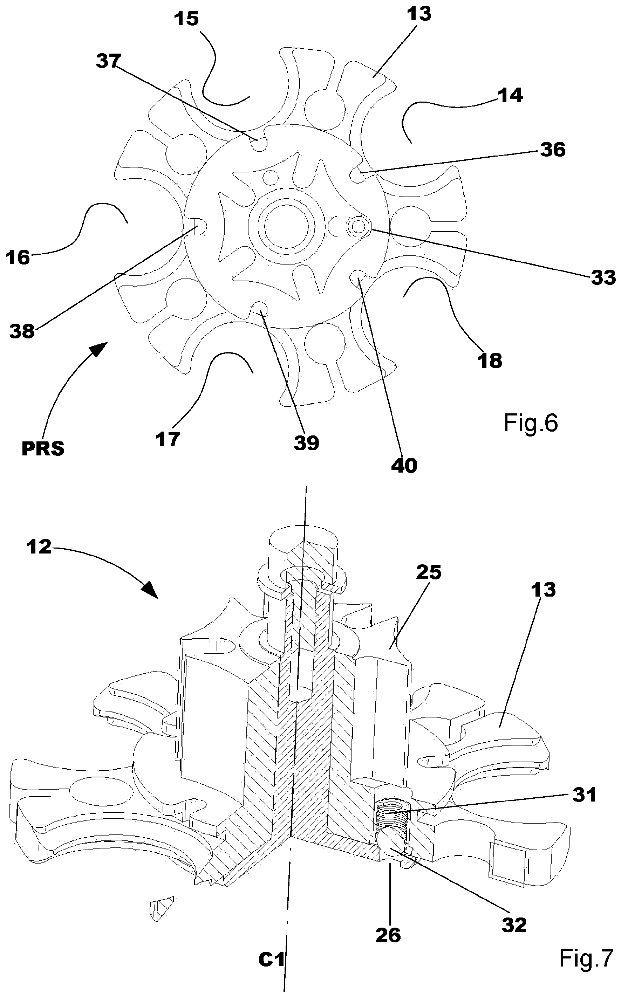

As shown in Figs 2-4, the tool holders 19-23 are housable inside a tool holder storage 12 included in the apparatus 10. In detail, the tool holder storage 12 comprises a rotatable body 13 on which at least two housing seats 14-18 are obtained to house at least two tool holders 19-23 (in this embodiment five housing seats 14-18 to house five tool holders 19-23), each equippable on the machining head 11. In the embodiment provided by way of shown example, as set out in Figs 5 and 7, the body 13 is rotatable around an axis C1 parallel to the axis of rotation C of the machining head 11.

The tool holder storage 12 and the machining head 11 are mutually movable to perform a tool change. In particular, as shown in Fig. 5, the tool holder storage 12 is movable along both an approach direction DA (for example horizontal), so as to be able to approach or move away from the machining head 11, both along an equipment direction DED (transverse to the approach direction DA, for example vertical), so as to be able to equip the machining head 11 with a tool holder or unequip the machining head 11 with a tool holder. The movement of the storage along the two directions is made by actuator means; the actuator means can comprise, for example, actuators of pneumatic type and/or electric actuators (in particular, a pneumatic actuator and/or electric actuator for motion in the approach direction DA and a pneumatic actuator and/or electric actuator for motion in the equipment direction DED).

Further, as shown in Figs 2,4,7, the apparatus 10 comprises coupling means 24, 25 to removably couple in rotation the machining head 11 and the rotatable body 13 so as to transform the rotary movement of the machining head 11 around the axis of rotation C in a rotary motion of the body 13 around the axis C1.

With reference to Fig. 2, the coupling means 24, 25 comprises a pin element 24 that is integral with the machining head 11 and an intermittence element 25 that is integral with the body 13. In particular, as shown in Fig. 6, the intermittence element 25 is provided with a plurality of slots 36-40. In particular, the slots 36-40 are the same in number as the number of housing seats 14-18.

In the embodiment of the accompanying figures, the pin element 24 is selectively couplable with each of the slots 36-40 defining a Maltese cross type mechanism, transforming each rotation by a complete revolution of the machining head 11 around the axis of rotation C in a rotation of a fraction of a revolution (indicated below also as step P) of the body 13 around the axis C1.

The housing seats 14-18, as shown in Fig. 6, are equidistant from one another and arranged along a circumference that is centred on the axis C1; the angular distance between two adjacent housing seats 14,15;15,16;16,17;17,18;18,14 is equal to the step P of the intermittent rotary motion of the body 13 around the axis C1.

The tool holder storage 12 comprises a support 34 with which the body 13 is rotatably coupled around the axis C1; the tool holder storage 12 being, in addition, provided with seat positioning means 26-32 that exert a retaining action to retain the body 13 on the support 34 in order to define a set of predefined angular positions around the axis C1 for the housing seats 14-18, the angular distance between two adjacent predefined angular positions being equal to step P of the intermittent rotary motion.

In the embodiment of the accompanying figures, as shown in Fig. 7, the seat positioning means 26-32 exerts a retaining action of mechanical type and comprises a plurality of slits 26-30 obtained on the support 34, which defines the positions of the set of predefined angular positions, and at least one spring element 31 connected to a retaining element 32.

The spring element 31 and the retaining element 32 are integral with the body 13. In particular, the retaining element 32 is suitable for being inserted at least partially inside the slits 26-30 whilst the spring element 31 is configured to exert a retaining force suitable for maintaining the retaining element 32 inside the slit; in this manner the rotation of the body 13 is permitted only after overcoming the retaining action exerted by the spring element 31.

In a further possible embodiment that is not shown, the seat positioning means 26-32 can comprise two pluralities of magnetic elements so as to exert a retaining action of magnetic type: a first plurality of magnetic elements which defines the positions of the set of predefined angular positions whereas the second plurality of magnetic elements is integral with the body 13. In this case, each magnetic element of one of the two pluralities of magnetic elements is attracted by each magnetic element of the other one of the two pluralities of magnetic elements.

As anticipated previously, the tool holder storage 12 is movable both along an approach direction DA and along an equipment direction DED. In particular, as shown in Fig. 5, the movement of the tool holder storage 12 along the approach direction DA is transverse to the axis of rotation C and extends from a distal position PD, in which the tool holder storage 12 is far from the machining head 11, to a proximal position PP, in which the tool holder storage 12 is on the other hand near the machining head 11; the movement along the equipment direction DED is on the other hand parallel to the axis of rotation C and extends from an position of equipment/unequipment PED, in which the body 13 is near the machining head 11, to a selection position PS, in which the body 13 is far from the machining head 11.

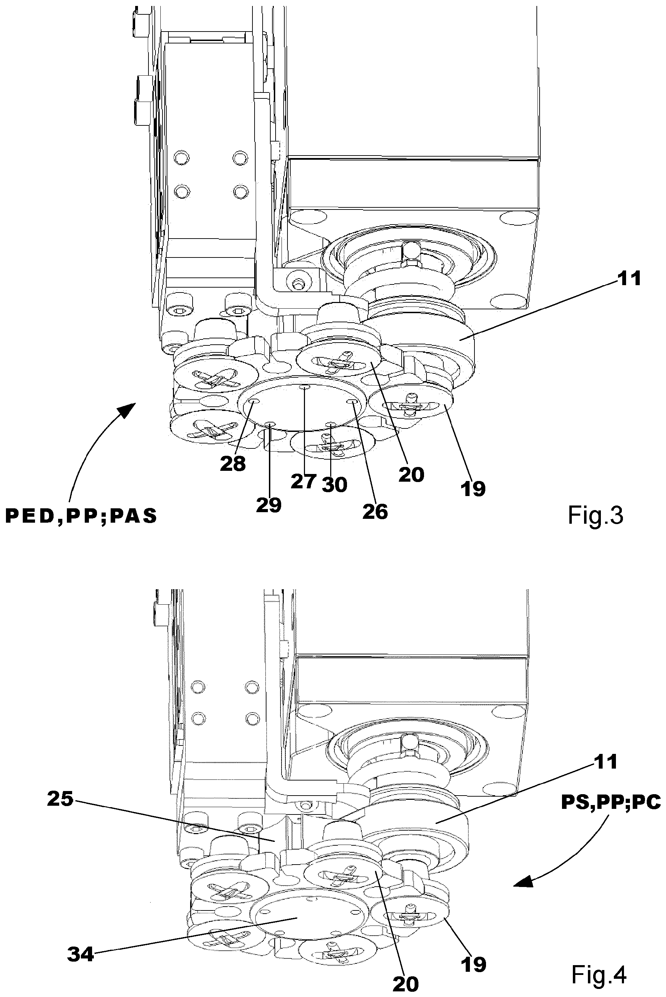

The coupling in rotation of the machining head 11 and of the body 13 by the coupling means 24,25 occurs in at least one choice position PC shown in in Fig. 4, i.e. in the position in which the tool holder storage 12 occupies the selection position PS along the equipment direction DED and the proximal position PP along the approach direction DA.

Otherwise, the tool holders 19-23 can be equipped on, or unequipped from the machining head 11 in a hooking/unhooking position PAS, i.e. in the position in which the storage occupies the position of equipment/unequipment PED along the equipment direction DED and the proximal position PP along the approach direction DA.

In one embodiment provided by way of example of the present invention, equipping the tool holders 19-23 on the machining head 11 is performed by magnetic interaction elements (not shown) provided respectively both on the tool holders 19-23 and on the machining head 11. The magnetic interaction elements can be, for example, of the magnets positioned, considering the accompanying figures, on the base of the tool holders 19-23 and at a conical seat (not shown) obtained in the machining head 11 and inside which the tool holder 19 is arranged once equipped. In this manner, along the equipment direction DED, the attracting forces of magnetic origin are defined that enable the tool holder 19 to be equipped on the machining head 11.

The tool holder storage 12 is further provided with anti-rotation means 25, 33 to prevent the rotation of the body 13 in a rest position PRS shown in Fig. 2, that is the position in which the tool holder storage 12 occupies the distal position PD along the approach direction DA and the position of equipment/unequipment PED along the equipment direction DED. The anti-rotation means 25,33 includes a fixed peg 33 and the intermittence element 25 introduced previously; in particular, as shown in Fig. 6, when the tool holder storage 12 is in the rest position PRS, the peg 33 engages one of the slots 36-40 of the intermittence element 25 so as to prevent the rotation of the body 13.

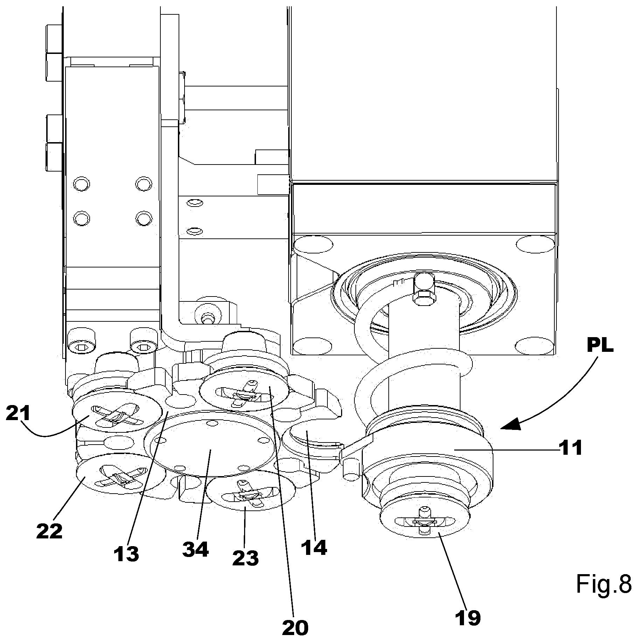

In the non-limiting embodiment of the accompanying figures, the tool holder storage 12 is fitted to the machining head 11, provided with at least one or due linear axes controlled by the numerical control, so as to enable the tool holder to be changed whilst the machining head 11 is in motion, for example to reach the position from which the next machining task will be initiated. In this case, the machining head 11 is movable with respect to the body 13 along a direction parallel to the axis of rotation C between a work position PL, shown in Fig. 8, in which the machining head 11 is decoupled from the body 13, and a parking position PDP, shown in Fig. 1, in which the machining head 11 and the body 13 can be removably coupled in rotation by the coupling means 24, 25. The machining head 11 and the tool holder storage 12 can be included, for example, in an operating unit 50 comprised in the apparatus 10.

Otherwise, the tool holder storage 12 can be fitted to a support portion of the apparatus 10 and be distinct and separate from the machining head 11; for example the tool holder storage 12 can be fitted to a work surface 51 of the apparatus 10. In this case, the machining head 11 has to be able to move from a work position to an edge position in which the machining head 11 and the body 13 of the tool holder storage 12 are couplable in rotation by the intermittent coupling means 24, 25.

The operation of the apparatus 10 during a switch of tool holders 19-23 will be disclosed below and, in particular, the interactions between the machining head 11 and the tool holder storage 12. The tool holder switch process is schematized in Fig. 8.

Initially, as shown in Figs 2 and 6, the tool holder storage 12 is in the rest position PRS in which the body 13 is prevented from rotating, the tool holder 19 is equipped on the machining head 11 and the body 13 has an empty housing seat 14.

Subsequently, the tool holder 19 equipped on the machining head 11 is unequipped and in this manner housed inside the empty housing seat 14.

In particular, the tool holder storage 12 is initially moved from the rest position PRS to the hooking/unhooking position PAS (Fig.3), that is, the tool holder storage 12 is moved from the distal position PD to the proximal position PP along the approach direction DA, whilst the position along the equipment direction DED remains constant; subsequently, the tool holder storage 12 is moved from the hooking/unhooking position PAS to the choice position PC (Fig. 4), that is, the tool holder storage 12 moves, along the equipment direction DED, from the position of equipment/unequipment PED to the selection position PS, whilst the position along the approach direction DA remains constant.

In the embodiment shown in the attached figures, in fact, the tool holders 19-23 and the housing seats 14-18 have complementary profiles that enable a tool holder to be housed in and extracted from a housing seat by shifting the tool holder storage 12 along the approach direction DA. At the same time, however, the profiles are such as to ensure a grip along the equipment direction DED that is sufficient to overcome the forces that enable the tool holder 19 to be equipped on the machining head 11. In particular, considering the embodiment provided by way of example disclosed previously, the movement of the tool holder storage 12 from the position of equipment/unequipment PED to the selection position PS enables the forces of attraction of magnetic origin to be overcome that enable the tool holder 19 to be equipped on the machining head 11.

At this point, the machining head 11 and the body 13 are coupled in rotation and the machining head 11 is rotated around the axis of rotation C. In the choice position PC, in fact, the machining head 11 and the tool holder storage 12 are couplable in rotation by the coupling means 24,25 so as to transform the rotary movement of the machining head 11 in a rotary motion of the body 13 enabling another tool holder 20 to be selected (which is subsequently also called new tool holder 20) to be equipped.

By rotating the machining head 11, it is in fact possible to induce, thanks to the coupling means 24, 25 that acts as rotation transmission means, the rotatable body 13 to rotate in turn according to an intermittent rotary motion of step P (a step P for every complete rotation of a revolution of the machining head 11).

In particular, at each complete rotation of the machining head 11, the pin 24 interacts temporarily with one of the slots 36-40 of the intermittence element 25, overcoming the retaining action and inducing the body 13 to rotate by a step P around the axis C1. This means that, by controlling the number of complete rotations of the machining head 11, it is possible to choose the number of steps that the body 13 performs and thus the tool holder that will be equipped.

Subsequently, the new tool holder 20 is equipped on the machining head 11 and, subsequently, extracted from the housing seat 15 thereof. In particular, the tool holder storage 12 is moved again from the choice position PC to the hooking/unhooking position PAS to equip the new tool holder 20 and is, subsequently, moved from the hooking/unhooking position PAS to the rest position PRS.

As introduced previously, in the embodiment of the accompanying figures the tool holder storage 12 is fitted to the machining head 11. Thus in this case, before starting the change procedure disclosed above, the machining head 11 is moved from the machining position PL to the parking position PDP so that the machining head 11 and the body 13 can be removably coupled in rotation by the coupling means 24, 25. Lastly, at the end of a tool holder change, the machining head 11 is returned to the machining position PL.

Owing to the features disclosed above, the CNC machining apparatus 10 is economically advantageous from the mechanical, electrical and software point of view as just a few simple movements are necessary to change a tool.

The movements suitable for equipping and unequipping a tool holder are in fact simple and linear and are obtainable for example with a common fixed-stroke pneumatic cylinder. Further, owing to the coupling means 24,25, it is possible to rotate the rotatable body 13 of the tool holder storage 12, and thus select the new tool holder to be equipped, without a dedicated motor being necessary but exploiting the rotation of the machining head 11.

The simplicity of the movements, in particular, enables both the time to be reduced that is necessary to replace a tool holder and simplify the constructional features of the tool holder storage 12. This latter aspect enables the general dimensions of the tool holder storage 12 to be reduced with respect to those of the prior art and also increases the reliability thereof.

Further, the proposed solution is applicable to almost all CNC machining apparatuses, including a machining head, because most of the machining heads used are able to rotate around an axis, whereas the remaining necessary features are easily implementable when missing.

Lastly, when fitting the tool holder storage 12 to the machining head 11, it is possible to replace the tool holder whilst the machining head 11 is moving.

From what has been set out, it is clear that the apparatus 10 according to the invention successfully achieves the previously mentioned preset objects.

What has been disclosed and shown in the accompanying drawings has been provided solely in order to illustrate the innovative features of the CNC machining apparatus 10.

## Claims

1. CNC machining apparatus (10) comprising:
- a machining head (11) equipped with a tool holder (19) configured to hold a tool and provided with an axis of rotation (C) controlled by the numerical control;
- a tool holder storage (12) with a body (13) that is rotatable around an axis (C1) and that comprises at least two housing seats (14-18) to house at least two tool holders (19-23) each equippable on said machining head (11), said tool holder storage (12) and said machining head (11) being mutually movable;
- coupling means (24,25) to removably couple in rotation said machining head (11) and said body (13) so as to transform a rotary movement of said machining head (11) around said axis of rotation (C) in a rotary movement of said body (13) around said axis (C1);
**characterized in that said tool holder storage is movable along an approaching direction (DA), so as to be able to approach or move away from said machining head (11), and along an equipment direction (DED), so as to be able to equip said machining head (11) with a tool holder or unequip said machining head (11) with a tool holder.**

2. Apparatus (10) according to claim 1, wherein said coupling means (24,25) comprises a pin element (24) that is integral with the machining head (11) ad an intermittence element (25) that is integral with said body (13), said intermittence element (25) being provided with a plurality of slots (36-40); said pin element (24) being selectively couplable with each of said slots (36-40) in order to transform a continuous rotary movement of said machining head (11) around said axis of rotation (C) in an intermittent rotary motion of said body (13) around said axis (C1).

3. Apparatus (10) according to the preceding claim, wherein said slots (36-40) are equal in number to the number of said housing seats (14-18), said pin and intermittence elements defining, in particular, a mechanism, for example a Maltese cross type mechanism, configured to transform each complete rotation of said machining head (11) around said axis of rotation (C) in a rotation of a fraction of turn of said body (13) around said axis (C1).

4. Apparatus (10) according to anyone of claims 2 and 3, wherein said housing seats (14-18) are arranged along a circumference centered with respect to said axis (C1) and are angularly equally spaced one from the other, an angular distance between two adjacent housing seats being equal to a step (P) of the intermittent rotary motion of said body (13) around said axis (C1).

5. Apparatus (10) according to the preceding claim, wherein said tool holder storage (12) comprises a support (34) to which is rotary coupled said body (13) around said axis (C1), said tool holder storage (12) comprising seat positioning means (26-32) to exert a restraining action of said body (13) on said support (34) in order to define a set of predefined angular positions around said axis (C1) for said housing seats (14-19), and being an angular distance between two adjacent predefined angular positions equal to a step (P) of the intermittent rotary motion; said seat positioning means (26-32) exerting a restraining action in particular of mechanical type or magnetic type.

6. Apparatus (10) according to anyone of the preceding claims, wherein said machining head (11) is movable with respect to said body (13) along a direction parallel to said axis of rotation (C) between a machining position (PL), in which said machining head (11) is decoupled from said body (13), and a parking position (PDP), in which said machining head (11) and said body (13) can be removably coupled in rotation via said coupling means (24,25).

7. Apparatus (10) according to anyone of the preceding claims, comprising actuator means for moving said tool holder storage (12) along **said** approaching direction (DA) transversal to said axis of rotation (C) from a distal position (PD), in which said tool holder storage (12) is distant from said machining head (11), to a proximal position (PP), in which said tool holder storage (12) is near to said machining head (11), and for moving said tool holder storage (12) along **said** equipment direction (DE) parallel to said axis of rotation (C) from a picking position (PS), in which said body (13) is distant from said machining head (11), to a position of equipment/unequipment (PED), in which said body (13) is near to said machining head (11), being provided that said machining head (11) and said body (13) are removably coupled in rotation together via said coupling means (24,25) at least when said tool holder storage (12) is placed in said proximal position (PP) and in said picking position (PS).

8. Apparatus (10) according to the previous claim, wherein said tool holder storage (12) is provided with anti-rotation means (25,33) to prevent the rotation of said body (13) in a resting position (PRS), that is a position in which said tool holder storage (12) occupies said distal position (PD) along said approaching direction (DA) and said position of equipment/unequipment position (PED) along said equipment direction (DE).

9. Apparatus (10) according to anyone of the preceding claims, wherein said at least two tool holders (19-23) and said machining head (11) have respective magnetic interaction elements to equip said at least two tool holders (19-23) to said machining head (11).

10. Apparatus (10) according to anyone of the preceding claims, wherein said machining head (11) is provided with at least one or two or three linear axes controlled by the numeric control and/or with one or two or three axes of rotation controlled by the numeric control, and wherein said tool holder storage (12) is arranged on said machining head (11) in order to follow the movements along said at least one or two linear axes.

11. Apparatus (10) according to anyone of claims 1-9, wherein said tool holder storage (12) is arranged on a portion of support of said apparatus (10) that is distinct and separated from said machining head (11).

12. Tool changing method for unequipping a tool holder (19) from a machining head (11) and equipping said machining head (11) with another tool holder (20), comprising the steps of:
- unequipping said equipped tool holder (19) housing it inside an empty housing seat (14) obtained in a body (13) of a tool holder storage (12) rotatable around an axis (C1);
- coupling in rotation said machining head (11) and said body (13) and rotating said machining head (11) around an axis of rotation (C) in order to transform a rotary movement of said machining head (11) in a rotary motion of said body (13) around said axis (C1), wherein said rotary motion of said body (13) allows to select said other tool holder (20) that has to be equipped;
the method being **characterized in**
- equipping said other tool holder (20) to said machining head (11) extracting it from a respective housing seat (15) obtained on said body (13).

13. Method according to the preceding claim, wherein said unequipping said tool holder (19) comprises approaching said tool holder storage (12) to said machining head (11) along an approaching direction (DA) in order to insert said tool holder (19) in said empty housing seat (14) and, after that, moving said tool holder storage (12) along an equipment direction (DE) in order to move said body (13) away from said machining head (11) and, thus, separate said tool holder (19) from said machining head (11); and wherein said equipping said other tool holder (20) comprises moving said tool holder storage (12) along said equipment direction (DE) in order to near said body (13), and thus said other tool holder (20), to said machining head (11) and, after that, move said tool holder storage (12) away from said machining head (11) along said approaching direction (DA) in order to extract said other tool holder (20) from said respective housing seat (15).

14. Method according to anyone of claims 12 and 13, wherein said coupling in rotation said machining head (11) and said rotatable body (13) comprises coupling a pin element (24) integral with said machining head (11) to an intermittence element (25) integral with said body (13), so that a continuous rotary movement of said machining head (11) can be transformed in an intermittent rotary motion of said body (13).

15. Method according to anyone of claims 12-14, comprising moving said machining head (11) with respect to said body (13) along a direction parallel to said axis of rotation (C) between a machining position (PL), in which said machining head (11) is decoupled in rotation from said body (13), and a parking position (PDP), in which said body (13) can be coupled in rotation to said machining head (11) via coupling means (24,25).

## Patentansprüche

1. CNC-Bearbeitungseinrichtung (10), umfassend:
- einen Bearbeitungskopf (11), der mit einem Werkzeughalter (19) ausgestattet ist, der konfiguriert ist, um ein Werkzeug zu halten, und der mit einer von der numerischen Steuerung gesteuerten Drehachse (C) versehen ist;
- ein Werkzeughalterlager (12) mit einem Körper (13), der um eine Achse (C1) drehbar ist und der mindestens zwei Gehäusesitze (14 bis 18) umfasst, um mindestens zwei Werkzeughalter (19 bis 23) aufzunehmen, die jeweils auf dem Bearbeitungskopf (11) ausrüstbar sind, wobei das Werkzeughalterlager (12) und der Bearbeitungskopf (11) zueinander beweglich sind;
- Kupplungsmittel (24, 25), um den Bearbeitungskopf (11) und den Körper (13) abnehmbar in Drehung zu koppeln, um eine Drehbewegung des Bearbeitungskopfes (11) um die Drehachse (C) in eine Drehbewegung des Körpers (13) um die Achse (C1) umzuwandeln;
**dadurch gekennzeichnet, dass** das Werkzeughalterlager entlang einer Annäherungsrichtung (DA) beweglich ist, um sich dem Bearbeitungskopf (11) annähern oder von ihm wegbewegen zu können, und entlang einer Ausrüstungsrichtung (DED), um den Bearbeitungskopf (11) mit einem Werkzeughalter ausrüsten oder den Bearbeitungskopf (11) nicht mit einem Werkzeughalter ausrüsten zu können.

2. Einrichtung (10) nach Anspruch 1, wobei das Kopplungsmittel (24, 25) ein Stiftelement (24) umfasst, das mit dem Bearbeitungskopf (11) integriert ist, und ein Unterbrechungselement (25), das mit dem Körper (13) integriert ist, wobei das Unterbrechungselement (25) mit einer Vielzahl von Schlitzen (36 bis 40) versehen ist; wobei das Stiftelement (24) selektiv mit jedem der Schlitze (36 bis 40) koppelbar ist, um eine kontinuierliche Drehbewegung des Bearbeitungskopfes (11) um die Drehachse (C) in eine intermittierende Drehbewegung des Körpers (13) um die Achse (C1) umzuwandeln.

3. Einrichtung (10) nach dem vorstehenden Anspruch, **dadurch gekennzeichnet, dass** die Anzahl der Schlitze (36 bis 40) gleich der Anzahl der Gehäusesitze (14 bis 18) ist, wobei die Stift- und Unterbrechungselemente insbesondere einen Mechanismus, beispielsweise einen Mechanismus vom Typ Malteserkreuz, definieren, der konfiguriert ist, um jede vollständige Drehung des Bearbeitungskopfes (11) um die Drehachse (C) in eine Drehung eines Bruchteils einer Drehung des Körpers (13) um die Achse (C1) umzuwandeln.

4. Einrichtung (10) nach einem der Ansprüche 2 und 3, wobei die Gehäusesitze (14 bis 18) entlang eines in Bezug auf die Achse (C1) zentrierten Umfangs angeordnet und winkelmäßig gleichmäßig voneinander beabstandet sind, wobei ein Winkelabstand zwischen zwei benachbarten Gehäusesitzen gleich einem Schritt (P) der intermittierenden Drehbewegung des Körpers (13) um die Achse (C1) ist.

5. Einrichtung (10) nach dem vorstehenden Anspruch, wobei das Werkzeughalterlager (12) einen Träger (34) umfasst, an den der Körper (13) um die Achse (C1) drehbar gekoppelt ist, wobei das Werkzeughalterlager (12) Sitzpositionierungsmittel (26 bis 32) umfasst, um eine Rückhaltewirkung des Körpers (13) auf den Träger (34) auszuüben, um einen Satz von vordefinierten Winkelpositionen um die Achse (C1) für die Gehäusesitze (14 bis 19) zu definieren, und wobei ein Winkelabstand zwischen zwei benachbarten vordefinierten Winkelpositionen gleich einem Schritt (P) der intermittierenden Drehbewegung ist; wobei die Sitzpositionierungsmittel (26-32) eine Rückhaltewirkung ausüben, insbesondere mechanischer oder magnetischer Art.

6. Einrichtung (10) nach einem der vorstehenden Ansprüche, wobei der Bearbeitungskopf (11) in Bezug auf den Körper (13) entlang einer Richtung parallel zur Drehachse (C) zwischen einer Bearbeitungsposition (PL), in der der Bearbeitungskopf (11) von dem Körper (13) entkoppelt ist, und einer Parkposition (PDP), in der der Bearbeitungskopf (11) und der Körper (13) über die Kopplungsmittel (24, 25) lösbar in Drehung gekoppelt werden können, beweglich ist.

7. Einrichtung (10) nach einem der vorstehenden Ansprüche, umfassend Aktoren zum Bewegen des Werkzeughalterlagers (12) entlang **der** Annäherungsrichtung (DA) quer zur Drehachse (C) von einer distalen Position (PD), in der das Werkzeughalterlager (12) vom Bearbeitungskopf (11) entfernt ist, in eine proximale Position (PP), in der sich das Werkzeughalterlager (12) in der Nähe des Bearbeitungskopfes (11) befindet, und zum Bewegen des Werkzeughalterlagers (12) entlang **der** Ausrüstungsrichtung (DE) parallel zur Drehachse (C) aus einer Entnahmeposition (PS), in der der Körper (13) von dem Bearbeitungskopf (11) entfernt ist, in eine Ausrüstungs-/Entausrüstungsposition (PED), in der der Körper (13) nahe an dem Bearbeitungskopf (11) ist, bereitgestellt wird, wobei der Bearbeitungskopf (11) und der Körper (13) über die Kopplungsmittel (24, 25) mindestens dann abnehmbar in Drehung miteinander gekoppelt sind, wenn das Werkzeughalterlager (12) in der proximalen Position (PP) und in der Entnahmeposition (PS) angeordnet ist.

8. Einrichtung (10) nach dem vorstehenden Anspruch, wobei das Werkzeughalterlager (12) mit Anti-Dreh-Mitteln (25, 33) versehen ist, um die Drehung des Körpers (13) in einer Ruheposition (PRS) zu verhindern, d. h. einer Position, in der das Werkzeughalterlager (12) die distale Position (PD) entlang der Annäherungsrichtung (DA) und die Ausrüstungs-/Entausrüstungsposition (PED) entlang der Ausrüstungsrichtung (DE) einnimmt.

9. Einrichtung (10) nach einem der vorstehenden Ansprüche, wobei die mindestens zwei Werkzeughalter (19 bis 23) und der Bearbeitungskopf (11) jeweils magnetische Wechselwirkungselemente aufweisen, um die mindestens zwei Werkzeughalter (19 bis 23) mit dem Bearbeitungskopf (11) auszurüsten.

10. Einrichtung (10) nach einem der vorstehenden Ansprüche, wobei der Bearbeitungskopf (11) mit mindestens einer oder zwei oder drei von der numerischen Steuerung gesteuerten linearen Achsen und/oder mit einer oder zwei oder drei von der numerischen Steuerung gesteuerten Drehachsen versehen ist, und wobei das Werkzeughalterlager (12) auf dem Bearbeitungskopf (11) so angeordnet ist, dass es den Bewegungen entlang der mindestens einen oder zwei linearen Achsen folgt.

11. Einrichtung (10) nach einem der Ansprüche 1 bis 9, wobei das Werkzeughalterlager (12) auf einem Teil des Trägers der Einrichtung (10) angeordnet ist, der von dem Bearbeitungskopf (11) getrennt ist.

12. Werkzeugwechselverfahren zum Abnehmen eines Werkzeughalters (19) von einem Bearbeitungskopf (11) und zum Ausrüsten des Bearbeitungskopfes (11) mit einem anderen Werkzeughalter (20), umfassend die Schritte:
- Entausrüsten des ausgerüsteten Werkzeughalters (19), Unterbringen desselben in einem leeren Gehäusesitz (14), der in einem Körper (13) eines um eine Achse (C1) drehbaren Werkzeughalterlagers (12) erhalten ist;
- Koppeln in der Drehung des Bearbeitungskopfes (11) und des Körpers (13) und Drehen des Bearbeitungskopfes (11) um eine Drehachse (C), um eine Drehbewegung des Bearbeitungskopfes (11) in eine Drehbewegung des Körpers (13) um die Achse (C1) umzuwandeln, wobei die Drehbewegung des Körpers (13) es erlaubt, den anderen Werkzeughalter (20) auszuwählen, der ausgerüstet werden muss;
wobei das Verfahren **dadurch gekennzeichnet ist, dass**
- der andere Werkzeughalter (20) an dem Bearbeitungskopf (11) durch Herausziehen aus einem entsprechenden Gehäusesitz (15) an dem Körper (13) ausgerüstet wird.

13. Verfahren nach dem vorstehenden Anspruch, wobei das Entausrüsten des Werkzeughalters (19) das Annähern des Werkzeughalterlagers (12) an den Bearbeitungskopf (11) entlang einer Annäherungsrichtung (DA) umfasst, um den Werkzeughalter (19) in den leeren Gehäusesitz (14) einzusetzen, und danach das Bewegen des Werkzeughalterlagers (12) entlang einer Ausrüstungsrichtung (DE), um den Körper (13) von dem Bearbeitungskopf (11) wegzubewegen und so den Werkzeughalter (19) von dem Bearbeitungskopf (11) zu trennen; und wobei das Ausrüsten des anderen Werkzeughalters (20) das Bewegen des Werkzeughalterlagers (12) entlang der Ausrüstungsrichtung (DE) umfasst, um den Körper (13) und damit den anderen Werkzeughalter (20) an den Bearbeitungskopf (11) anzunähern, und danach das Bewegen des Werkzeughalterlagers (12) von dem Bearbeitungskopf (11) weg entlang der Annäherungsrichtung (DA) umfasst, um den anderen Werkzeughalter (20) aus dem jeweiligen Gehäusesitz (15) herauszuziehen.

14. Verfahren nach einem der Ansprüche 12 und 13, wobei das Koppeln in der Drehung des Bearbeitungskopfes (11) und des drehbaren Körpers (13) bei der Drehung das Koppeln eines mit dem Bearbeitungskopf (11) integrierten Stiftelements (24) mit einem mit dem Körper (13) integrierten Intermittenzelement (25) umfasst, so dass eine kontinuierliche Drehbewegung des Bearbeitungskopfes (11) in eine intermittierende Drehbewegung des Körpers (13) umgewandelt werden kann.

15. Verfahren nach einem der Ansprüche 12 bis 14, umfassend das Bewegen des Bearbeitungskopfes (11) in Bezug auf den Körper (13) entlang einer Richtung parallel zur Drehachse (C) zwischen einer Bearbeitungsposition (PL), in der der Bearbeitungskopf (11) in Drehung von dem Körper (13) entkoppelt ist, und einer Parkposition (PDP), in der der Körper (13) über Kopplungsmittel (24, 25) in Drehung mit dem Bearbeitungskopf (11) gekoppelt werden kann.

## Revendications

1. Appareil d'usinage CNC (10) comprenant:
- une tête d'usinage (11) équipée d'un porte-outil (19) conçu pour porter un outil et pourvu d'un axe de rotation (C) commandé par la commande numérique;
- un stockage de porte-outil (12) avec un corps (13) rotatif autour d'un axe (C1) et qui comprend au moins deux sièges de logement (14-18) pour loger au moins deux porte-outils (19-23) pouvant être équipés chacun sur ladite tête d'usinage (11), ledit stockage de porte-outil (12) et ladite tête d'usinage (11) étant mutuellement mobiles;
- des moyens d'accouplement (24, 25) pour accoupler en rotation de manière amovible ladite tête d'usinage (11) et ledit corps (13) de manière à transformer un déplacement rotatif de ladite tête d'usinage (11) autour dudit axe de rotation (C) en un déplacement rotatif dudit corps (13) autour dudit axe (C1);
**caractérisé en ce que** ledit stockage de porte-outil est mobile le long d'une direction d'approche (DA), de manière à pouvoir s'approcher ou s'éloigner de ladite tête d'usinage (11), et le long d'une direction d'équipement (DED) de manière à pouvoir équiper ladite tête d'usinage (11) d'un porte-outil ou déséquiper ladite tête d'usinage (11) d'un porte-outil.

2. Appareil (10) selon la revendication 1, dans lequel ledit moyen d'accouplement (24, 25) comprend un élément broche (24) qui fait partie intégrante de la tête d'usinage (11) et un élément d'intermittence (25) qui fait partie intégrante dudit corps (13), ledit élément d'intermittence (25) étant pourvu d'une pluralité de fentes (36-40) ; ledit élément broche (24) pouvant être accouplé sélectivement à chacune desdites fentes (36-40) afin de transformer un déplacement rotatif continu de ladite tête d'usinage (11) autour dudit axe de rotation (C) en un mouvement rotatif intermittent dudit corps (13) autour dudit axe (C1).

3. Appareil (10) selon la revendication précédente, dans lequel lesdites fentes (36-40) sont égales en nombre au nombre desdits sièges de logement (14-18), lesdits éléments broches et d'intermittence définissant, en particulier, un mécanisme, par exemple un mécanisme de type croix de Malte, conçu pour transformer chaque rotation complète de ladite tête d'usinage (11) autour dudit axe de rotation (C) en une rotation d'une fraction de tour dudit corps (13) autour dudit axe (C1).

4. Appareil (10) selon l'une quelconque des revendications 2 et 3, dans lequel lesdits sièges de logement (14-18) sont disposés le long d'une circonférence centrée par rapport audit axe (C1) et sont angulairement espacés de manière égale les uns des autres, une distance angulaire entre deux sièges de logement adjacents étant égale à un pas (P) du mouvement rotatif intermittent dudit corps (13) autour dudit axe (C1).

5. Appareil (10) selon la revendication précédente, dans lequel ledit stockage de porte-outil (12) comprend un support (34) auquel est accouplé en rotation ledit corps (13) autour dudit axe (C1), ledit stockage de porte-outil (12) comprenant des moyens de positionnement de siège (26-32) pour exercer une action de retenue dudit corps (13) sur ledit support (34) afin de définir un ensemble de positions angulaires prédéfinies autour dudit axe (C1) pour lesdits sièges de logement (14-19), et étant une distance angulaire entre deux positions angulaires prédéfinies adjacentes égale à un pas (P) du mouvement rotatif intermittent ; lesdits moyens de positionnement de siège (26-32) exerçant une action de retenue en particulier de type mécanique ou de type magnétique.

6. Appareil (10) selon l'une quelconque des revendications précédentes, dans lequel ladite tête d'usinage (11) est mobile par rapport audit corps (13) le long d'une direction parallèle audit axe de rotation (C) entre une position d'usinage (PL), dans laquelle ladite tête d'usinage (11) est désaccouplée dudit corps (13), et une position de stationnement (PDP), dans laquelle ladite tête d'usinage (11) et ledit corps (13) peuvent être accouplés en rotation de manière amovible par l'intermédiaire dudit moyen d'accouplement (24, 25).

7. Appareil (10) selon l'une quelconque des revendications précédentes, comprenant des moyens d'actionnement permettant de déplacer ledit stockage de porte-outil (12) le long de ladite direction d'approche (DA) transversale audit axe de rotation (C) d'une position distale (PD), dans laquelle ledit stockage de porte-outil (12) est distant de ladite tête d'usinage (11), à une position proximale (PP), dans laquelle ledit stockage de porte-outil (12) est proche de ladite tête d'usinage (11), et pour déplacer ledit stockage de porte-outil (12) le long de ladite direction d'équipement (DE) parallèle audit axe de rotation (C) d'une position de prélèvement (PS), dans laquelle ledit corps (13) est distant de ladite tête d'usinage (11), à une position d'équipement/déséquipement (PED), dans laquelle ledit corps (13) est proche de ladite tête d'usinage (11), à condition que ladite tête d'usinage (11) et ledit corps (13) sont accouplés en rotation de manière amovible ensemble par l'intermédiaire dudit moyen d'accouplement (24, 25) au moins lorsque ledit stockage de porte-outil (12) est placé dans ladite position proximale (PP) et dans ladite position de prélèvement (PS).

8. Appareil (10) selon la revendication précédente, dans lequel ledit stockage de porte-outil (12) est pourvu de moyens anti-rotation (25, 33) pour empêcher la rotation dudit corps (13) dans une position de repos (PRS), c'est-à-dire une position dans laquelle ledit stockage de porte-outil (12) occupe ladite position distale (PD) le long de ladite direction d'approche (DA) et ladite position de position d'équipement/déséquipement (PED) le long de ladite direction d'équipement (DE).

9. Appareil (10) selon l'une quelconque des revendications précédentes, dans lequel lesdits au moins deux porte-outils (19-23) et ladite tête d'usinage (11) ont des éléments d'interaction magnétique respectifs pour équiper lesdits au moins deux porte-outils (19-23) à ladite tête d'usinage (11).

10. Appareil (10) selon l'une quelconque des revendications précédentes, dans lequel ladite tête d'usinage (11) est pourvue d'au moins un ou deux ou trois axes linéaires commandés par la commande numérique et/ou d'un ou deux ou trois axes de rotation commandés par la commande numérique, et dans lequel ledit stockage de porte-outil (12) est disposé sur ladite tête d'usinage (11) afin de suivre les déplacements le long desdits au moins un ou deux axes linéaires.

11. Appareil (10) selon l'une quelconque des revendications 1 à 9, dans lequel ledit stockage de porte-outil (12) est disposé sur une partie de support dudit appareil (10) qui est distincte et séparée de ladite tête d'usinage (11).

12. Procédé de changement d'outil permettant de déséquiper un porte-outil (19) d'une tête d'usinage (11) et d'équiper ladite tête d'usinage (11) d'un autre porte-outil (20), comprenant les étapes consistant à:
- déséquiper ledit porte-outil (19) équipé en le logeant à l'intérieur d'un siège de logement (14) vide obtenu dans un corps (13) d'un stockage de porte-outil (12) rotatif autour d'un axe (C1);
- accoupler en rotation ladite tête d'usinage (11) et ledit corps (13) et faire tourner ladite tête d'usinage (11) autour d'un axe de rotation (C) afin de transformer un déplacement rotatif de ladite tête d'usinage (11) en un mouvement rotatif dudit corps (13) autour dudit axe (C1), dans lequel ledit mouvement rotatif dudit corps (13) permet de sélectionner ledit autre porte-outil (20) qui doit être équipé;
le procédé étant **caractérisé par**
- l'équipement dudit autre porte-outil (20) de ladite tête d'usinage (11) en l'extrayant d'un siège de logement (15) respectif obtenu sur ledit corps (13).

13. Procédé selon la revendication précédente, dans lequel ledit déséquipement dudit porte-outil (19) comprend le rapprochement dudit stockage de porte-outil (12) par rapport à ladite tête d'usinage (11) le long d'une direction d'approche (DA) afin d'insérer ledit porte-outil (19) dans ledit siège de logement (14) vide et, après cela, de déplacer ledit stockage de porte-outil (12) le long d'une direction d'équipement (DE) afin d'éloigner ledit corps (13) de ladite tête d'usinage (11) et, ainsi, séparer ledit porte-outil (19) de ladite tête d'usinage (11) ; et dans lequel ledit équipement dudit autre porte-outil (20) comprend le déplacement dudit stockage de porte-outil (12) le long de ladite direction d'équipement (DE) afin d'approcher ledit corps (13), et donc ledit autre porte-outil (20), de ladite tête d'usinage (11) et, après cela, d'éloigner ledit stockage de porte-outil (12) de ladite tête d'usinage (11) le long de ladite direction d'approche (DA) afin d'extraire ledit autre porte-outil (20) dudit siège de logement (15) respectif.

14. Procédé selon l'une quelconque des revendications 12 et 13, dans lequel ledit accouplement en rotation de ladite tête d'usinage (11) et dudit corps (13) rotatif comprend l'accouplement d'un élément broche (24) faisant partie intégrante de ladite tête d'usinage (11) et d'un élément d'intermittence (25) faisant partie intégrante dudit corps (13), de sorte qu'un déplacement rotatif continu de ladite tête d'usinage (11) peut être transformé en un mouvement rotatif intermittent dudit corps (13).

15. Procédé selon l'une quelconque des revendications 12 à 14, comprenant le déplacement de ladite tête d'usinage (11) par rapport audit corps (13) le long d'une direction parallèle audit axe de rotation (C) entre une position d'usinage (PL), dans laquelle ladite tête d'usinage (11) est désaccouplée en rotation dudit corps (13), et une position de stationnement (PDP), dans laquelle ledit corps (13) peut être accouplé en rotation à ladite tête d'usinage (11) par l'intermédiaire de moyens d'accouplement (24, 25).
